# EUROPEAN PATENT APPLICATION

(11) **EP 3 043 266 A1**
(43) Date of publication of application: **13.07.2016**
(21) Application number: 14842063.1
(22) Date of filing: 02.09.2014
(51) Int. Cl.: G06F 12/00

(54) **STORE MERGE PROCESSING DEVICE, STORE MERGE PROCESSING SYSTEM, STORE MERGE PROCESSING METHOD, AND STORAGE MEDIUM**

(30) Priority: 04.09.2013 JP 2013183215
(71) Applicant: NEC Platforms, Ltd., Kanagawa 213-8511 (JP)
(72) Inventor: OSADA, Takashi, Kawasaki-shi Kanagawa 213-8511 (JP)
(74) Representative: Vossius & Partner Patentanwälte Rechtsanwälte mbB
(86) International application number: PCT/JP2014/004493
(87) International publication number: WO 2015/033551

(57) **Abstract**

To enable implementation of store merge processing with simple hardware even when there are accesses with different block sizes relating to write data for a storage device.

A store merge processing device 40 includes: a storage means that stores a plurality of entries, with regard to a plurality of first write instructions that are a plurality of write instructions issued by an external device issuable of write instructions of different block sizes, have access addresses including upper addresses and lower addresses, of which upper addresses are equal and have equal block sizes for writing data to a storage device, the entries including identification information for identifying a block size, a plurality of pieces of block data, address information indicating an upper address, and storage information indicating a storage state for each piece of the block data in association with one another; and an update means for, when the entries include an entry of which identification information and address information matches those of a second write instruction that has been newly issued by the external device, writing the block data included in the second write instruction in a position specified by the access address in the entry, and updates the storage information regarding the block data.

## Description

### [Technical Field]

The claimed invention relates to a store merge processing device and the like that, after collecting a plurality of write instructions of which access addresses are within a predetermined region, issues the write instructions to the storage device of a writing target.

### [Background Art]

Store merge processing is known as processing when the access addresses relating to a plurality of write instructions are, for example, on the same line for performing writing to a storage device, such as a main memory or a cache. In store merge processing, a write instruction is not transmitted to a storage device one by one, but a write instruction is transmitted to the storage device after write instructions are collected as one instruction. Store merge processing can improve the performance of accessing a storage device by decreasing the number of write accesses to the storage device.

A technique relating to such store merge processing is, for example, disclosed in PTL 1. PTL 1 discloses a device that includes a store buffer which stores data relating to a plurality of write instructions and suppresses access to a storage device, even when write instructions for different addresses on the storage device are issued.

Further, PTL 2 discloses a device that realizes a decreased number of partial write accesses for the main memory by having a plurality of address buffers and data buffers in parallel for storing addresses and data relating to partial write processing for the main memory.

Further, PTL 3 discloses a system of performing store merge processing by merging write data using a data queue for temporarily storing write data, in the same way as byte marks. In this system, store merge processing is performed except in the case of a combination of a leading full write access and a subsequent partial write access.

### [Citation List]

### [Patent Literature]

[PTL 1] Japanese Unexamined Patent Application Publication No. 2012-043202
[PTL 2] Japanese Unexamined Patent Application Publication No. Hei 09-282221
[PTL 3] Japanese Unexamined Patent Application Publication No. Hei 05-181742

### [Summary of Invention]

### [Technical Problem]

In write accesses to a storage device, such as a main memory or a cache, there are cases where there are accesses with different sizes of block data that constitute write data, such as full write accesses and partial write accesses. When store merge processing is performed in a system where there are such cases, it is necessary to consider that the units for collecting write data are matched, and there is a problem that it is difficult to realize store merge processing with a simple hardware configuration.

The above-described PTLs 1 and 2 do not particularly refer to a technique of performing store merge processing, when there are accesses with different block sizes relating to write data.

Further, PTLs 3 refers to store merge processing when there are accesses with different block sizes relating to write data, but PTL 3 is not sufficient to solve the above-described problem, as there are significant limitations for performing store merge processing.

The main objective of the claimed invention is to realize store merge processing with simple hardware even when there are accesses with different block sizes relating to write data for a storage device.

### [Solution to Problem]

An aspect of the present invention is a store merge processing device including: a storage means that stores a plurality of entries, with regard to a plurality of first write instructions that are a plurality of write instructions issued by an external device issuable of write instructions of different block sizes, have access addresses including upper addresses and lower addresses, of which upper addresses are equal and have equal block sizes for writing data to a storage device, the entries including identification information for identifying a block size, a plurality of pieces of block data, address information indicating an upper address, and storage information indicating a storage state for each piece of the block data in association with one another; and an update means for, when the entries include an entry of which identification information and address information matches those of a second write instruction that has been newly issued by the external device, writing the block data included in the second write instruction in a position specified by the access address in the entry, and updates the storage information regarding the block data.

Another aspect of the present invention, to achieve the above object, is a store merge processing method including: by an information processing device, storing, with regard to a plurality of first write instructions that are a plurality of write instructions issued by an external device issuable of write instructions of different block sizes, have access addresses including upper addresses and lower addresses, of which upper addresses are equal, and have equal block sizes for writing data to a storage device, into any one of a plurality of entries, identification information for identifying a block size, a plurality of pieces of block data, address information indicating an upper address, and storage information indicating a storage state for each piece of the block data in association with one another; and when the entries include an entry of which identification information and address information match those of a second write instruction that has been newly issued by the external device, writing the block data included in the second write instruction in a position specified by the access address in the entry, and updating the storage information regarding the block data.

Another aspect of the present invention, to achieve the above object, is a storage medium that stores a store merge program causing a computer to execute: storage processing that stores, with regard to a plurality of first write instructions that are a plurality of write instructions issued by an external device issuable of write instructions of different block sizes, have access addresses including upper addresses and lower addresses, of which upper addresses are equal, and have equal block sizes for writing data to a storage device, into any one of a plurality of entries, identification information for identifying a block size, a plurality of pieces of block data, address information indicating an upper address, and storage information indicating a storage state for each piece of the block data in association with one another; and update processing that, when the entries include an entry, of which identification information and address information match those of a second write instruction that has been newly issued by the external device, writes the block data included in the second write instruction in a position specified by the access address in the entry, and updates the storage information regarding the block data.

Furthermore, the present invention can be implemented by a non-transitory computer readable storage medium storing the above information reading program (computer program).

### [Advantageous Effects of Invention]

The claimed invention enables implementation of store merge processing with simple hardware even when there are accesses with different block sizes relating to write data for a storage device.

### [Brief Description of Drawings]

Fig. 1 is a block diagram illustrating a configuration of a store merge processing system according to a first exemplary embodiment of the claimed invention;
Fig. 2A is a flowchart (1 of 3) illustrating operation of the store merge processing system in the first exemplary embodiment of the claimed invention;
Fig. 2B is a flowchart (2 of 3) illustrating operation of the store merge processing system in the first exemplary embodiment of the claimed invention;
Fig. 2C is a flowchart (3 of 3) illustrating operation of the store merge processing system in the first exemplary embodiment of the claimed invention;
Fig. 3 is a diagram illustrating a configuration example of a write instruction for the main memory, that is issued from the central processing unit, in the first exemplary embodiment of the claimed invention;
Fig. 4 is a diagram illustrating a configuration example of information, that is stored in each entry of the store buffer address array, in the first exemplary embodiment of the claimed invention;
Fig. 5 is a block diagram illustrating a detailed configuration of an update unit in the first exemplary embodiment of the claimed invention;
Fig. 6 is a diagram illustrating a list of write instructions for the main memory, that is generated by a generation unit, in the first exemplary embodiment of the claimed invention;
Fig. 7A is a diagram (1 of 3) illustrating a specific example relating to a write instruction for the main memory, that is generated by the generation unit, in the first exemplary embodiment of the claimed invention;
Fig. 7B is a diagram (2 of 3) illustrating a specific example relating to a write instruction for the main memory, that is generated by the generation unit, in the first exemplary embodiment of the claimed invention;
Fig. 7C is a diagram (3 of 3) illustrating a specific example relating to a write instruction for the main memory, that is generated by the generation unit, in the first exemplary embodiment of the claimed invention;
Fig. 8 is a block diagram illustrating a configuration of a store merge processing device according to a second exemplary embodiment of the claimed invention; and
Fig. 9 is a block diagram illustrating a configuration of an information processing device that can execute a store merge processing device, in the exemplary embodiments of the claimed invention.

### [Description of Embodiments]

The following will describe the details of the exemplary embodiments of the claimed invention with reference to the drawings.

### <First Exemplary Embodiment>

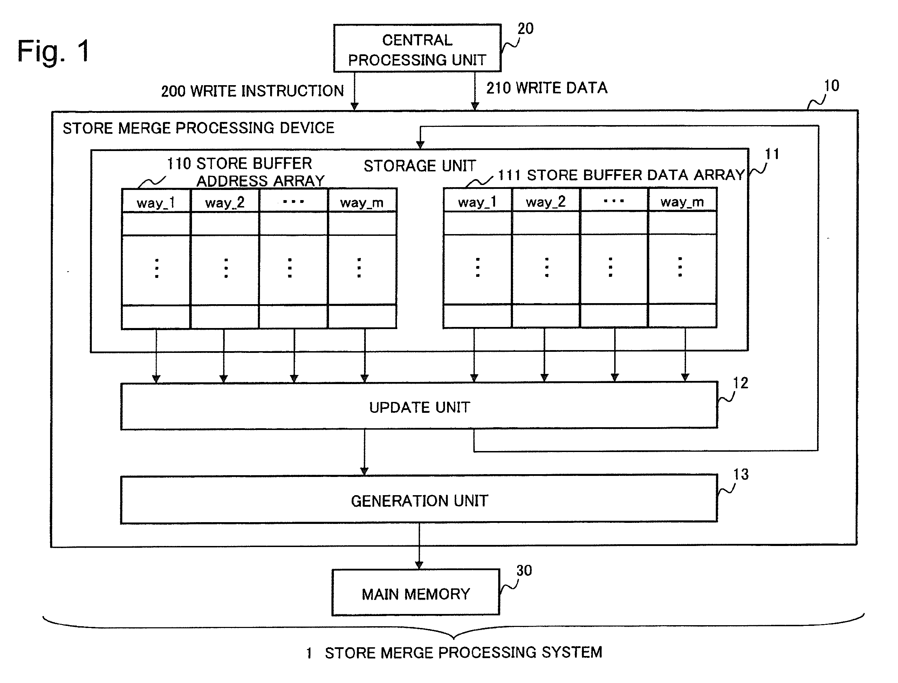

Fig. 1 is a block diagram conceptually illustrating a configuration of a store merge processing system 1 in a first exemplary embodiment. The store merge processing system 1 in the first exemplary embodiment has a store merge processing device 10, a central processing unit 20, and a main memory 30.

The central processing unit 20 issues a write instruction 200 for the main memory 20, and transmits the write instruction 200, together with write data 210, to the store merge processing device 10. The bus width of an input/output interface relating to the central processing unit 20 is 8 bytes (hereinafter, bytes are expressed as B), and the write data 210 is assumed to be 8B data.

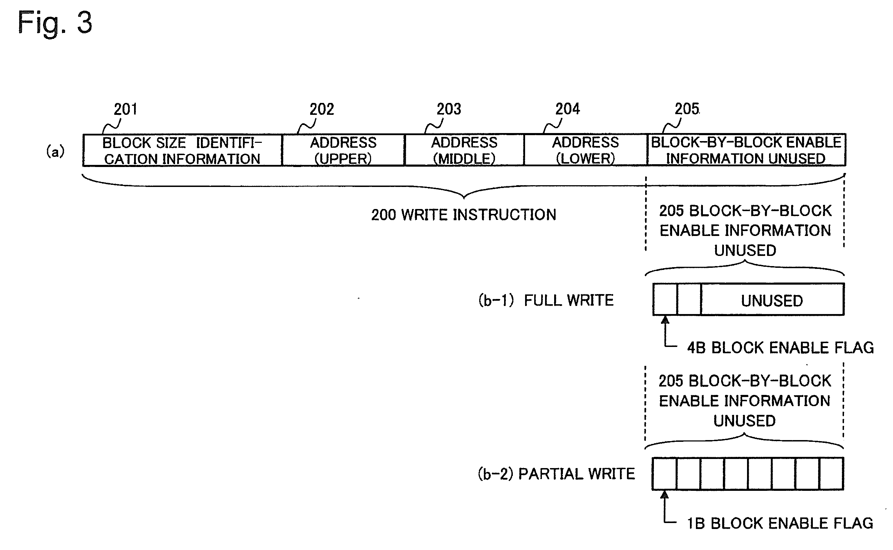

A configuration example of the write instruction 200 is illustrated in Fig. 3. The write instruction 200, as illustrated in (a) of Fig. 3, includes block size identification information 201, an address (upper) 202, an address (middle) 203, an address (lower) 204, and block-by-block enable information 205.

The block size identification information 201 is information for identifying the block size of the write data 210 relating to the write instruction 200. The block size identification information 201 is set to "1" for a full write instruction of 4B block size, and "0" for a partial write instruction of 1B block size by the central processing unit 20. The address (upper) 202, the address (middle) 203, and the address (lower) 204 are the access address in the main memory 30 relating to the write instruction 200, and are, respectively, upper bits, middle bits, and lower bits of the access address.

The block-by-block enable information 205 is 8-bit information that indicates whether or not each piece of block data in the write data 210 is valid. As illustrated in (b-1) of Fig. 3, when the write instruction 200 is a full write instruction, the block-by-block enable information 205 indicates whether or not each of two pieces of 4B data included in the write data 210 is valid. In this case, the remaining 6 bits in the block-by-block enable information are unused. As illustrated in (b-2) of Fig. 3, when the write instruction 200 is a partial write instruction, the block-by-block enable information 205 indicates whether or not each of eight pieces of 1B data included in the write data 210 is valid.

The store merge processing device 10 performs store merge processing, when store merge processing can be performed with respect to the received plurality of the write instructions 200 and the write data 210. After this processing, the store merge processing device 10 transmits a write instruction as a collection of the plurality of write instructions to the main memory 30.

The main memory 30 writes data to the designated address in accordance with the write instruction received from the store merge processing device 10. It is assumed that the line size for accessing the main memory 30 is 128B.

The store merge processing device 10 includes a storage unit 11, an update unit 12, and a generation unit 13. The storage unit 11 is a storage device, such as an electronic memory, of which access is controlled by an electronic circuit or a computer program and a processor that operates in accordance with the computer program. The update unit 12 and the generation unit 13 may be an electronic circuit, or realized by a computer program and a processor that operates in accordance with the computer program.

The storage unit 11 includes a store buffer address array 110 and a store buffer data array 111. The store buffer address array 110 stores a plurality of entries that include information which serves as a basis for the update unit 12 to determine whether or not store merge processing is possible for writing to a specific address of the main memory 30. The store buffer data array 111 holds write data for the main memory 30, that is associated with each entry in the store buffer address array 110. Each entry in the store buffer data array 111 stores 128B data with respect to a full write instruction, and 32B data with respect to a partial write instruction as write data equal to one line of the main memory 30. One entry in the store buffer address array 110 and the store buffer data array 111 includes information relating to one specific address, and the entry is registered and updated by the update unit 12.

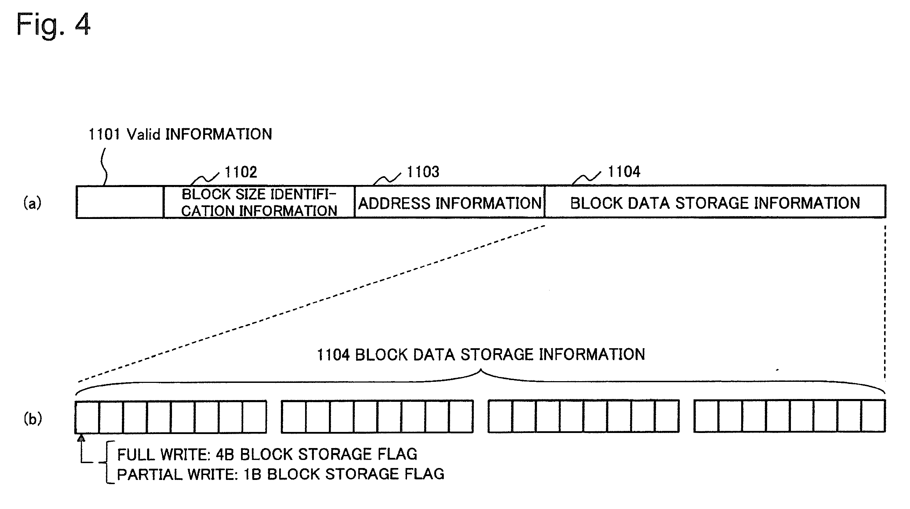

A configuration example of information held in each entry of the store buffer address array 110 is illustrated in Fig. 4. Each entry includes valid information 1101, block size identification information 1102, address information 1103, and block data storage information 1104 in association with one another. The valid information 1101 is information that indicates whether or not the relevant entry is valid, and the valid information is set to "1" when the relevant entry is valid and "0" when the relevant entry is invalid or unused. The block size identification information 1102 is information that indicates whether the relevant entry is an entry relating to access data of a full write instruction or an entry relating to access data of a partial write instruction. The block size identification information 1102 is set to "0" for the former case and "1" for the latter case.

The address information 1103 is information relating to an access address for the main memory 30. The block data storage information 1104 is 32-bit information that indicates, for each block data in the write data, whether store merge processing relating to the relevant entry is performed as write data for the main memory 30. The block data storage information 1104 includes 32 flags. Each flag in the block data storage information 1104 indicates information on each 4B block with respect to a full write instruction, and information on each 1B block with respect to a partial write instruction.

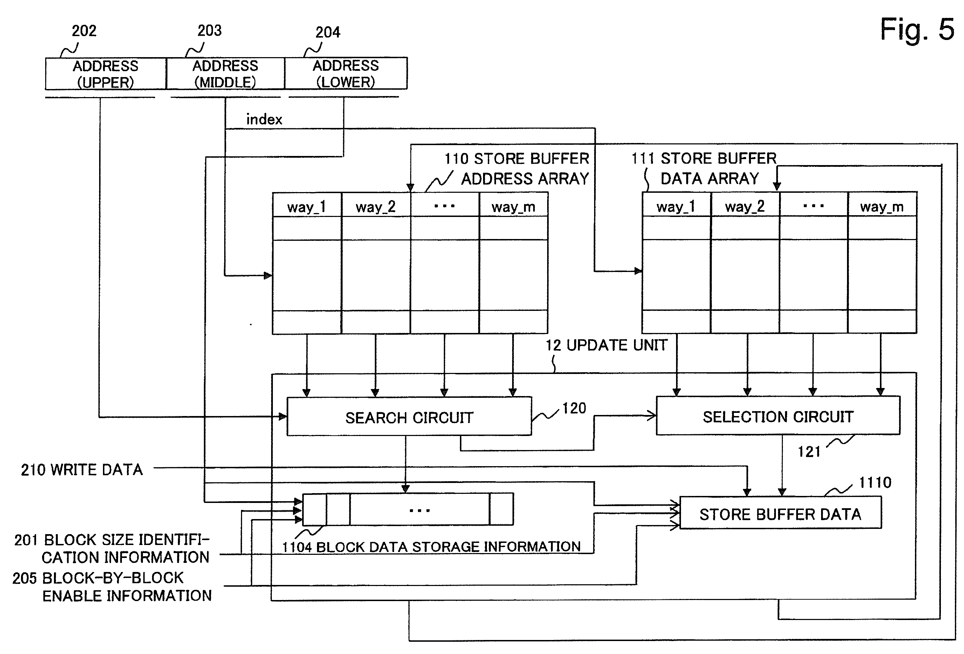

The detailed configuration of the update unit 12 is illustrated in Fig. 5. Fig. 5 also illustrates how information included in a write instruction 200 is used, when the update unit 12 updates an entry in the store buffer address array 110 and the store buffer data array 111.

As illustrated in Fig. 5, the store buffer address array 110 and the store buffer data array 111 store information by m ways of a set associative method that includes m (m is integer not less than 1) number of entries for each address, of which address (middle) 203 in the main memory 30 is equal. Each entry in the store buffer address array 110 holds a value indicated by the address (upper) 202 as address information 1103.

The update unit 12 receives the write instruction 200 and the write data 210 for the main memory 30 that were issued by the central processing unit 20. The search circuit 120 in the update unit 12 searches a predetermined entry from among m number of entries designated by the address (middle) 203 in the store buffer address array 110. The predetermined entry is an entry, of which address information 1103 is equal to the address (upper) 202, and valid information 1101 is "1". The search circuit 120 inputs the search result to a selection circuit 121 in the update unit 12.

When the block size identification information 1102 in the entry, that is searched and specified by the search circuit 120, is equal to the block size identification information 201 in the write instruction 200, the update unit 12 performs the following processing: That is, the update unit 12 specifies the position of block data from values indicated by the block size identification information 201 and the address (lower) 204 with respect to the block data, of which block-by-block enable information 205 with respect to the block data is set to "1". The update unit 12 sets the flag with respect to the relevant block data in the block data storage information 1104 to "1". The selection circuit 121 selects an entry that is associated with the above-described entry in the store buffer data array 111 based on the search result which is input from the search circuit 120. The update unit 12 writes the block data that is specified by values indicated by the block size identification information 201, the address (lower) 204, and the block-by-block enable information 205 to the entry selected by the selection circuit 121 as store buffer data 1110.

There is a case where there is no entry, of which address information 1103 is equal to the address (upper) 202, and valid information 1101 is "1" in the above-described m number of entries. In such a case, the search circuit 120 checks whether there is an unused entry, of which valid information 1101 is "0" from the m number of entries. When there is at least one unused entry, the search circuit 120 selects any one of the unused entries and inputs the selection result to the selection circuit 121. The update unit 12 sets the valid information 1101 in the relevant entry to "1", sets the block size identification information 1102 to the value indicated by the block size identification information 201, and sets the address information 1103 to the value indicated by the address (upper) 202. The selection circuit 121 selects an entry that is associated with the above-described entry in the store buffer data array 111 based on the selection result which is input by the search circuit 120. The update unit 12 writes the block data that is specified by values indicated by the block size identification information 201, the address (lower) 204, and the block-by-block enable information 205 to the entry selected by the selection circuit 121 as the store buffer data 1110.

When there is no unused entry in the m number of entries as the result of the above-described checking of whether there is an unused entry, the search circuit 120 selects any one of entries from among the m number of entries in accordance with predetermined criteria. The predetermined criteria include an algorithm, such as LRU (Least Recently Used). The search circuit 120 inputs the selection result to the selection circuit 121. The selection circuit 121 selects an entry that is associated with the above-described entry in the store buffer data array 111 based on the selection result which is input from the search circuit 120. The update unit 12 inputs information that is held in the entry in the store buffer address array 110 selected by the search circuit 120, and in the entry in the store buffer data array 111 selected by the selection circuit 121 to the generation unit 13. The update unit 12 sets the values relating to the block size identification information 1102, the address information 1103, and the block data storage information 1104 to the entry selected by the search circuit 120 in the same way as described above. Further, the update unit 12 writes the block data in the entry selected by the selection circuit 121 as store buffer data 1110.

Suppose there is an entry, of which address information 1103 searched and specified by the search circuit 120 is equal to the address (upper) 202, and the valid information 1101 is "1". Further, with respect to this entry, suppose the value indicated by the block size identification information 1102 is different from the value indicated by the block size identification information 201 in the write instruction 200. In this case, in the same way as described above, the update unit 12 inputs the information held in the entry selected by the search circuit 120 and selection circuit 121 to the generation unit 13. The update unit 12, in the same way as described above, inputs the values to the entry selected by the search circuit 120 and selection circuit 121.

Based on the information input by the update unit 12, the generation unit 13 generates a write instruction for the main memory 30 and transmits the generated write instruction to the main memory 30, together with the write data.

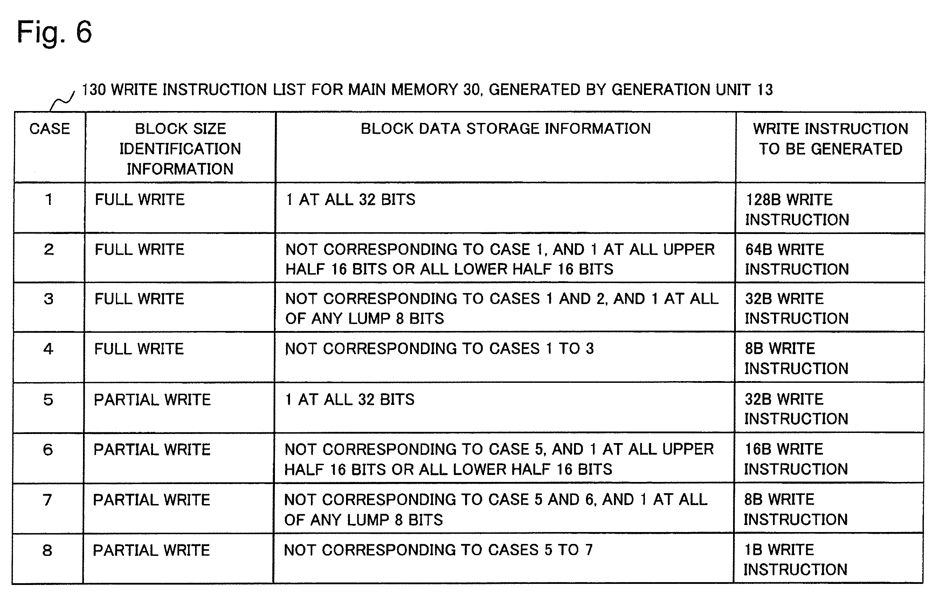

An example of the write instruction for the main memory 30, generated by the generation unit 13, is illustrated in Figs. 6 to 7C. The generation unit 13 generates a write instruction, as illustrated in a write instruction list 130 generated by the generation unit 13 for the main memory 30, based on the values indicated by the block size identification information 1102 and the block data storage information 1104.

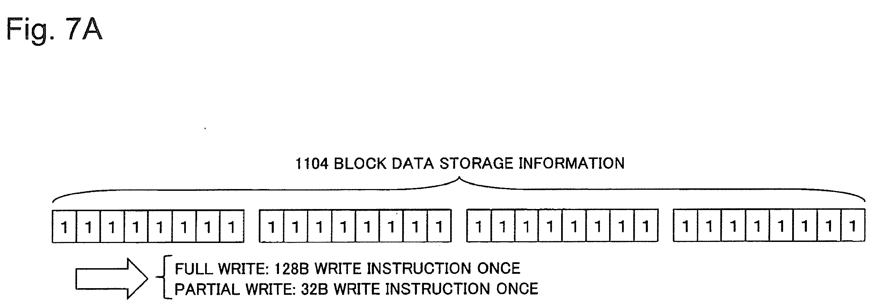

For example, in the case 1 where the block size identification information 1102 indicates full write and 32 bits relating to the block data storage information 1104 are all "1", the generation unit 13 generates a 128B write instruction once. In the case 5 where the block size identification information 1102 indicates partial write and 32 bits relating to the block data storage information 1104 are all "1", the generation unit 13 generates a 32B write instruction once. The case 1 and the case 5 are illustrated in Fig. 7A.

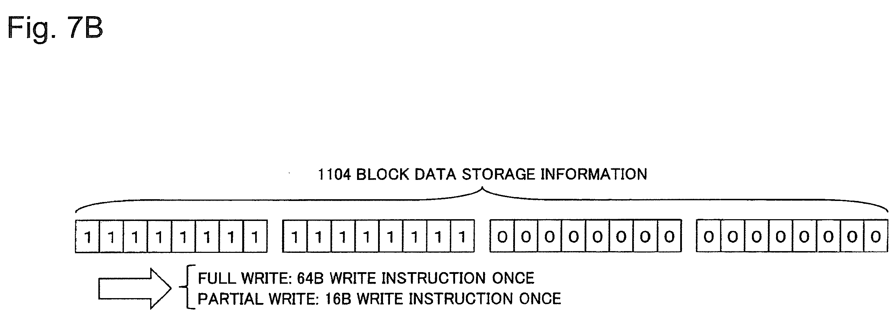

In the case 2 where the block size identification information 1102 indicates full write and the upper half or the lower half of 16 bits relating to the block data storage information 1104 are all "1" (exclusive of a case corresponding to the case 1), the generation unit 13 generates a 64B write instruction once. In the case 6 where the block size identification information 1102 indicates partial write and the upper half or the lower half of 16 bits relating to the block data storage information 1104 are all "1" (exclusive of a case corresponding to the case 5), the generation unit 13 generates a 16B write instruction once. An example of the case 2 and the case 6 is illustrated in Fig. 7B.

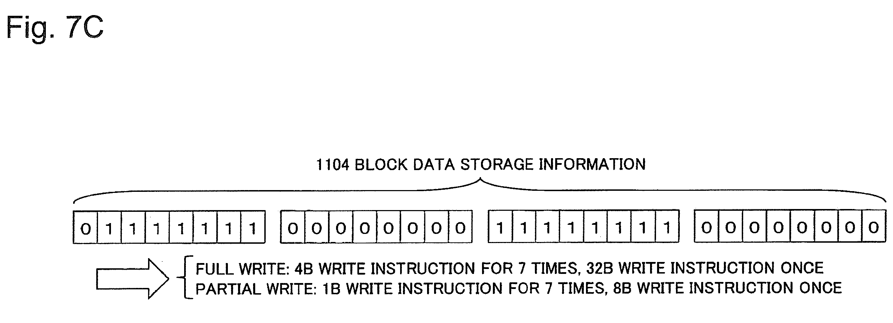

When the block data storage information 1104 is the value illustrated in Fig. 7C, incase that the block size identification information 1102 indicates full write, the generation unit 13 generates a 4B write instruction for seven times and a 32B write instruction once. When the block size identification information 1102 indicates partial write, the generation unit 13 generates a 1B write instruction for seven times and a 32B write instruction once.

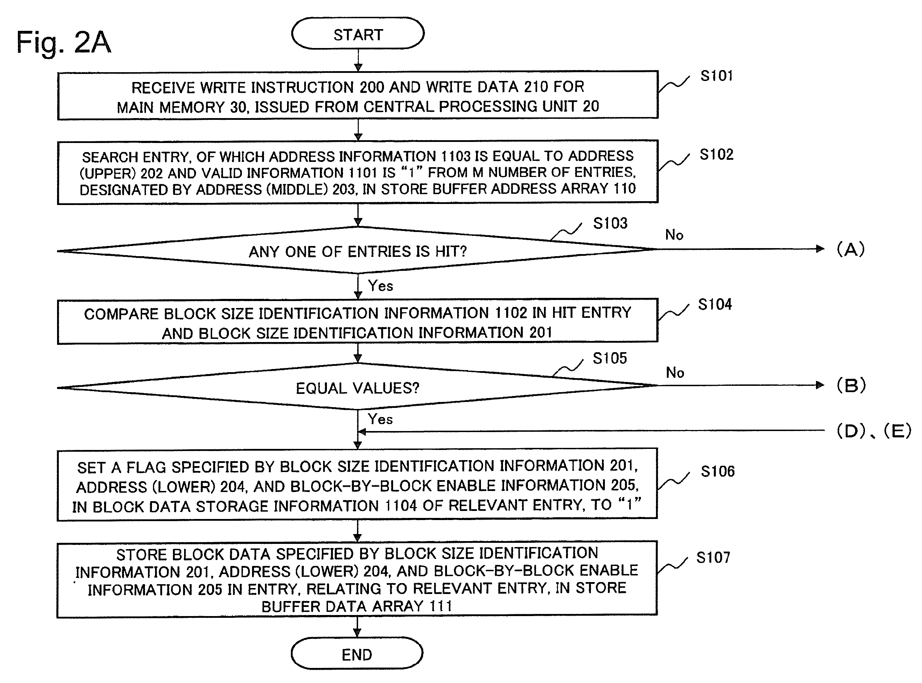

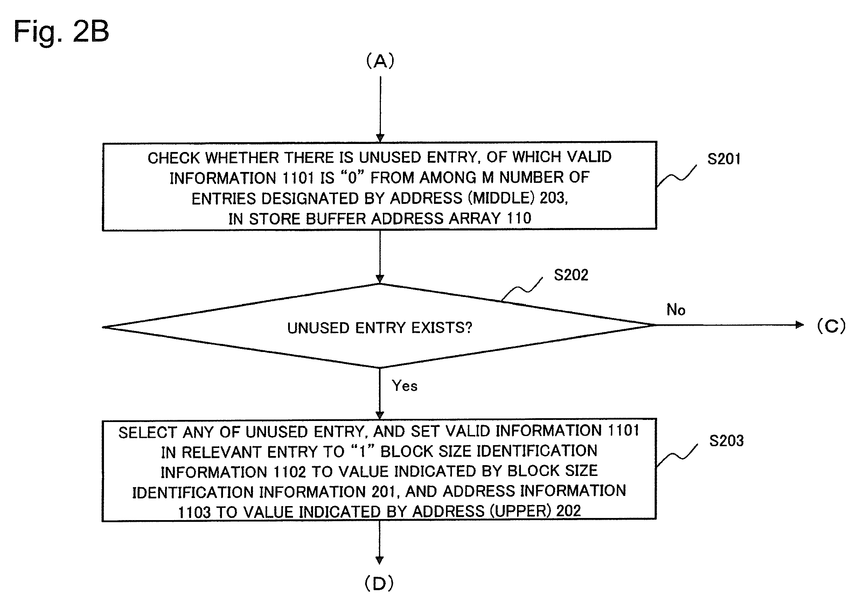

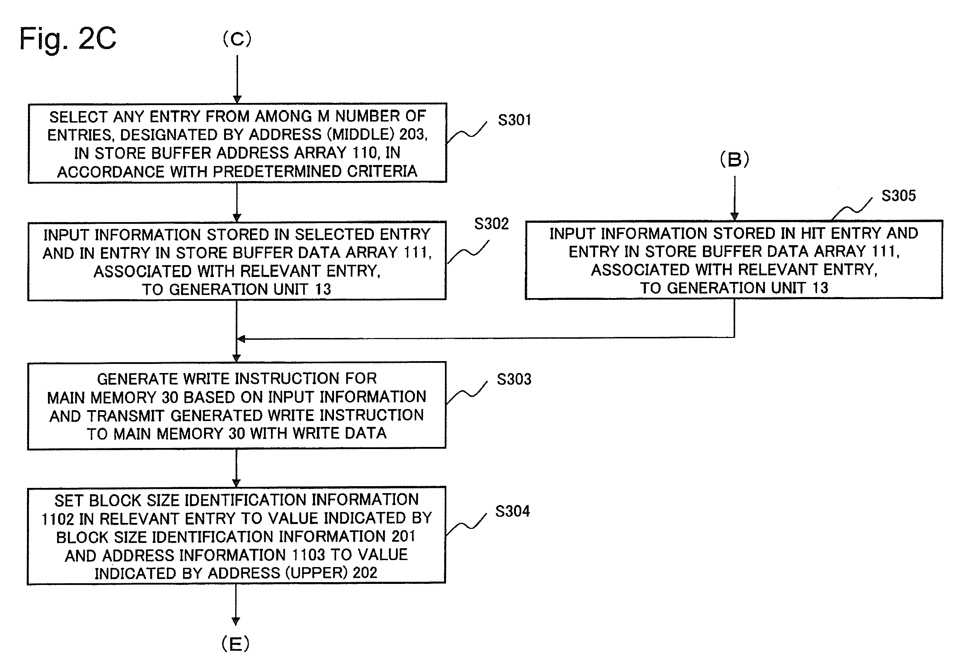

Next, operation (processing) of the store merge processing system 1 in the first exemplary embodiment will be described in detail with reference to the flowchart of Figs. 2A to 2C.

The update unit 12 receives the write instruction 200 and write data 210 for the main memory 30, that are issued by the central processing unit 20 (step S101). The update unit 12 searches an entry, of which address information 1103 is equal to the address (upper) 202 and the valid information 1101 is "1" from among the m number of entries, which are designated by the address (middle) 203, in the store buffer address array 110 (step S102).

When any one of the entries is hit (Yes at step S103), the update unit 12 compares the block size identification information 1102 in the hit entry and the block size identification information 201 (step S104). When the values are equal (Yes at step S105), the update unit 12 sets a flag, specified by the block size identification information 201, the address (lower) 204, and the block-by-block enable information 205 in the block data storage information 1104 of the relevant entry, to "1" (step S106). The update unit 12 writes block data specified by the block size identification information 201, the address (lower) 204, and the block-by-block enable information 205 in an entry relating to the relevant entry in the store buffer data array 111 (step S107). This ends the entire processing.

When there is no hit entry at step S103 (No at step S103), the update unit 12 checks whether there is an unused entry, of which valid information 1101 is "0", from among the m number of entries designated by the address (middle) 203, in the store buffer address array 110 (step S201). When there are unused entries (Yes at step S202), the update unit 12 selects any one of the unused entries and sets the valid information in the relevant entry to "1", the block size identification information 1102 to the value indicated by the block size identification information 201, and the address information 1103 to the value indicated by the address (upper) 202 (S203). The processing thereafter proceeds to step S106.

When there is no unused entry at step S202 (No at step S202), the update unit 12 selects any one of the entries from the m number of entries designated by the address (middle) 203 in the store buffer address array 110 in accordance with predetermined criteria (step S301). The update unit 12 inputs the information held in the selected entry and the entry in the store buffer data array 111, which is associated with the relevant entry, to the generation unit 13 (step S302).

The generation unit 13 generates a write instruction for the main memory 30 based on the input information, and transmits the generated write instruction to the main memory 30 together with the write data (step S303). The update unit 12 sets the block size identification information 1102 in the relevant entry to the value indicated by the block size identification information 201, and the address information 1103 to the value indicated by the address (upper) 202 (step S304), and the processing proceeds to step S106.

When the values are different at step S105 (No at step S105), the update unit 12 inputs the information held in the hit entry and the entry in the store buffer data array 111, which is associated with the relevant entry, to the generation unit 13 (step S305). The processing thereafter proceeds to step S303.

The store merge processing device 10 according to the first exemplary embodiment can realize store merge processing by simple hardware even when there are accesses with different block sizes relating to write data for a storage device. This is because of the following reasons: that is,
- Each entry in the storage unit 11 stores the block size identification information 1102.
- The update unit 12 performs store merge processing relating to the write instruction 200 based on the information stored in the entries relating to the write instructions, of which block sizes and access addresses are equal to those of the received write instruction 200.

In a system where there are accesses with different block sizes relating to write data for the storage device, there are cases where data of different block sizes are written in the same address region. Even in such cases, there is a problem that the size of hardware, which performs store merge processing, becomes larger as data of different block sizes are merged when store merge processing is performed.

In the store merge processing device 10 in the first exemplary embodiment, each entry in the storage unit 11 stores block size identification information 1102. The update unit 12 performs store merge processing, when there is an entry relating to a write instruction with equal block size and access address to the received write instruction 200. That is, the store merge processing device 10 performs store merge processing after confirming that the data of equal block size is written in the same address region. Thus, it is not necessary to have a function of merging data of different block sizes. Accordingly, the store merge processing device 10 can realize store merge processing by simple hardware even in a system where there are accesses with different block sizes relating to write data for a storage device.

Further, when the block data storage information 1104 input by the update unit 12 indicates that a plurality of pieces of block data with continuous access addresses are in a state of store merge processing, the generation unit 13 in the first exemplary embodiment generates a write instruction for collectively writing a plurality of pieces of block data to the main memory 30. Accordingly, the store merge processing device 10 can improve the performance of accessing the main memory 30 by decreasing the number of write accesses for the main memory 30.

Note that the target, to which the store merge processing device 10 writes data, is not limited to the main memory, and may be, for example, a storage device, such as a cache.

Further, in the exemplary embodiment, the central processing unit 30 issues a write instruction of two kinds of block sizes, full write accesses and partial write accesses, but the central processing unit 30 may issue a write instruction of three or more kinds of block sizes. In such a case, the block size identification information 1102 in each entry indicates a value that identifies three or more kinds of block sizes, and the store merge processing device 10 performs store merge processing for writing data of equal block sizes in the same address region.

### <Second Exemplary Embodiment>

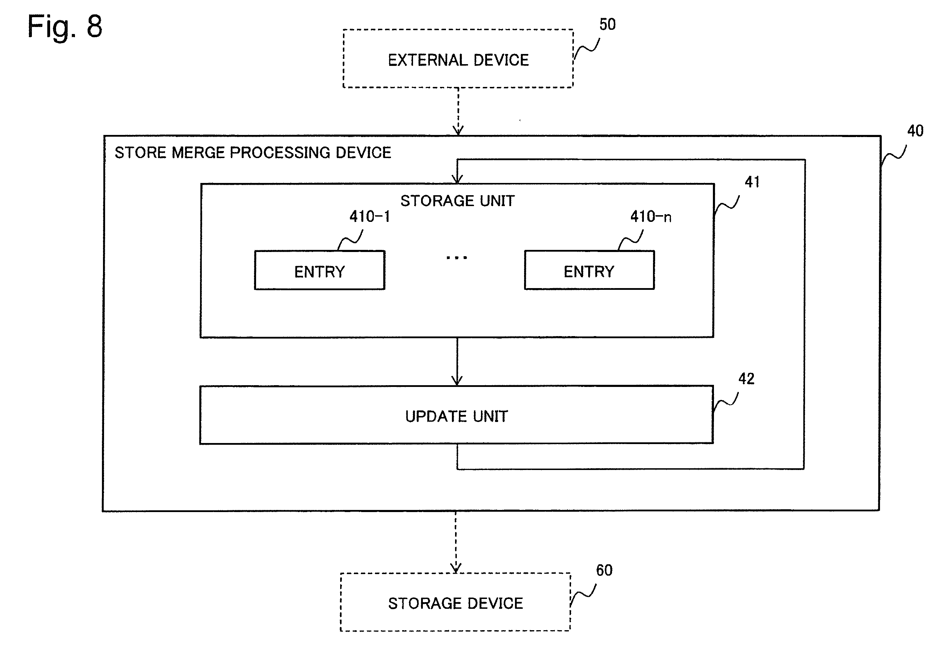

Fig. 8 is a block diagram conceptually illustrating a configuration of the store merge processing device 40 in a second exemplary embodiment.

The store merge processing device 40 in the second exemplary embodiment includes a storage unit 41 and an update unit 42.

The storage unit 41 receives a plurality of write instructions issued by an external device 50 issuable of write instructions with different block sizes. The storage unit 41 includes n (n is integer of 2 or more) number of entries 410-1 to 410-n. Each of the entries 410-1 to 410-n has an access address within a predetermined region, and stores predetermined information with respect to a plurality of write instructions with equal block sizes for writing data to the storage device 60. The predetermined information includes identification information for identifying a block size, a plurality of pieces of block data, address information indicating the position of a predetermined region, and storage information indicating the storage state of each piece of block data, that are stored in association with one another.

There are cases where there are entries for a write instruction, of which identification information for identifying the block size matches, and a predetermined region specified by the address information includes an access address. In this case, the update unit 42 stores the block data included in the relevant write instruction in a position specified by the access address in the relevant entry. Along with that, the update unit 42 updates the storage information relating to the relevant block data.

The second exemplary embodiment can realize store merge processing with simple hardware, even when there are accesses with different block sizes relating to write data for a storage device. This is because of the following reason: each entry in the storage unit 41 stores identification information for identifying a block size. Further, the update unit 42 performs store merge processing relating to the received write instruction based on the information stored in the entry relating to the write instruction, of which block size and access address are equal to the received write instruction.

### <Hardware Configuration Example>

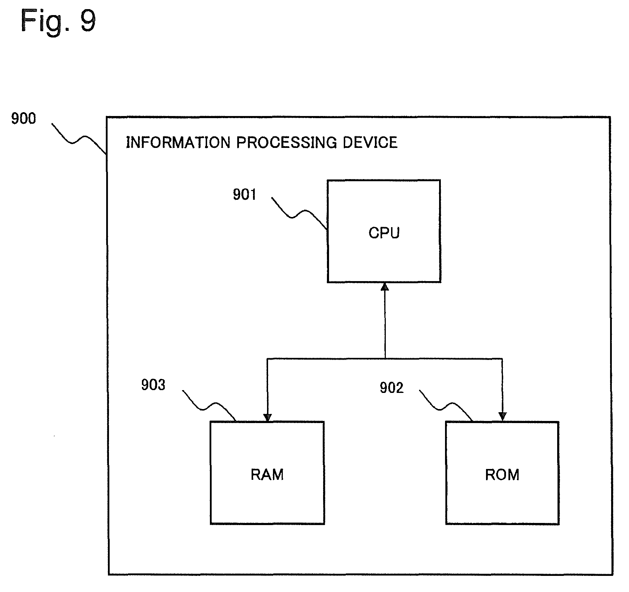

In each of the above-described exemplary embodiments, each part illustrated in Figs. 1 and 8 can be regarded as functional (processing) units (software modules) of a software program. However, the categorization of each part illustrated in the drawings is a configuration for convenience of explanation, and various configurations may be considered for implementation. An example of the hardware environment in such a case will be described with reference to Fig. 9.

Fig. 9 is a diagram illustratively describing a configuration of the information processing device 900 (a computer) that can execute the store merge processing device according to the exemplary embodiments of the present invention. That is, Fig. 9 is a computer (information processing device) configuration that can realize store merge processing device illustrated in Figs. 1 and 8, which represents hardware environment that can realize each function of the above-described exemplary embodiments.

The information processing device 900 illustrated in Fig. 9 is a common computer including a CPU 901 (Central Processing Unit), a ROM 902 (Read Only Memory), and a RAM 903 (Random Access Memory), all of which components are connected to one another through a bus (a communication line).

Then, the present invention described with the above-described exemplary embodiments as examples provides the information processing device 900 illustrated in Fig. 9 with a computer program that can realize the functions of the block configuration diagrams (Figs. 1 and 8) or the flowcharts (Figs. 2A to 2C), which are referred to in the description of the exemplary embodiments. Hereafter, the functions are achieved by loading the computer program on the CPU 901 of the relevant hardware, interpreting and executing the computer program. Further, the computer program provided in the relevant device may be stored in a storage device, such as a readable and writable volatile storage memory (RAM 903) or non-volatile storage memory (ROM 902).

As above, the present invention is described using the above-described exemplary embodiments as typical examples. However, the present invention is not limited to the above-described exemplary embodiments. That is, the present invention can be applied to a variety of modes that can be understood by those skilled in the art within the scope of the present invention.

This application claims priority based on Japanese Patent Application No. 2013-183215 filed on September 4, 2013, which application is incorporated herein in its entirety by disclosure.

### [Reference Signs List]

1 Store merge processing system
10 Store merge processing device
11 Storage unit
110 Store buffer address array
111 Store buffer data array
1101 Valid information
1102 Block size identification information
1103 Address information
1104 Block data storage information
1110 Store buffer data
12 Update unit
120 Search circuit
121 Selection circuit
13 Generation unit
130 Write instruction list for main memory 30, generated by generation unit 13
20 Central processing unit
200 Write instruction
201 Block size identification information
202 Address (upper)
203 Address (middle)
204 Address (lower)
205 Block-by-block enable information
30 Main memory
40 Store merge processing device
41 Storage unit
410-1 to 410-n Entry
42 Update unit
50 External device
60 Storage device
900 Information processing device
901 CPU
902 ROM
903 RAM

## Claims

1. A store merge processing device comprising:
a storage means that stores a plurality of entries, with regard to a plurality of first write instructions that are a plurality of write instructions issued by an external device issuable of write instructions of different block sizes, have access addresses including upper addresses and lower addresses, of which upper addresses are equal and have equal block sizes for writing data to a storage device, the entries including identification information for identifying a block size, a plurality of pieces of block data, address information indicating an upper address, and storage information indicating a storage state for each piece of the block data in association with one another; and
an update means for, when the entries include an entry of which identification information and address information matches those of a second write instruction that has been newly issued by the external device, writing the block data included in the second write instruction in a position specified by the access address in the entry, and updates the storage information regarding the block data.

2. The store merge processing device according to Claim 1, further comprising:
a generation means for, when the storage information stored in the entry indicates that the entry stores a plurality of pieces of block data with continuous access addresses, generating a write instruction for collectively writing a plurality of pieces of block data to the storage device based on the identification information, address information, and storage information stored in the entry.

3. The store merge processing device according to Claim 2, wherein
the update means, when there is no entry, of which identification information and address information match those of the second write instruction, and there is no unused entry, selects any one of the entries in accordance with a predetermined criteria, and inputs the identification information, block data, address information, and storage information stored in the selected entry to the generation means; and
the generation means generates a write instruction for writing into the storage device, based on the identification information, block data, address information, and storage information that was input from the update means.

4. A store merge processing system comprising: the store merge processing device according to any one of Claims 1 to 3 and the storage device.

5. A store merge processing method comprising:
by an information processing device,
storing, with regard to a plurality of first write instructions that are a plurality of write instructions issued by an external device issuable of write instructions of different block sizes, have access addresses including upper addresses and lower addresses, of which upper addresses are equal, and have equal block sizes for writing data to a storage device, into any one of a plurality of entries, identification information for identifying a block size, a plurality of pieces of block data, address information indicating an upper address, and storage information indicating a storage state for each piece of the block data in association with one another; and
when the entries include an entry of which identification information and address information match those of a second write instruction that has been newly issued by the external device, writing the block data included in the second write instruction in a position specified by the access address in the entry, and updating the storage information regarding the block data.

6. The store merge processing method according to Claim 5, comprising:
by an information processing device,
when the storage information stored in the entry indicates that the entry stores a plurality of pieces of block data with continuous access addresses, generating a write instruction for collectively writing a plurality of pieces of block data to the storage device based on the identification information, address information, and storage information stored in the entry.

7. The store merge processing method according to Claim 6, comprising:
by an information processing device,
when there is no entry, of which identification information and address information match those of the second write instruction, and there is no unused entry, selecting any one of the entries in accordance with a predetermined criteria; and
generating a write instruction for writing into the storage device, based on the identification information, block data, address information, and storage information that is stored in the selected entry.

8. A storage medium that stores a store merge program causing a computer to execute:
storage processing that stores, with regard to a plurality of first write instructions that are a plurality of write instructions issued by an external device issuable of write instructions of different block sizes, have access addresses including upper addresses and lower addresses, of which upper addresses are equal, and have equal block sizes for writing data to a storage device, into any one of a plurality of entries, identification information for identifying a block size, a plurality of pieces of block data, address information indicating an upper address, and storage information indicating a storage state for each piece of the block data in association with one another; and
update processing that, when the entries include an entry, of which identification information and address information match those of a second write instruction that has been newly issued by the external device, writes the block data included in the second write instruction in a position specified by the access address in the entry, and updates the storage information regarding the block data.

9. The storage medium that stores the store merge program according to Claim 8 causing a computer to execute:
when the storage information stored in the entry indicates that the entry stores a plurality of pieces of block data with continuous access addresses, generation processing that generates a write instruction for collectively writing a plurality of pieces of block data to the storage device based on the identification information, address information, and storage information stored in the entry.

10. The storage medium that stores the store merge program according to Claim 9 for causing a computer to execute:
when there is no entry, of which identification information and address information match those of the second write instruction, and there is no unused entry, selecting any one of the entries in accordance with a predetermined criteria, inputting the identification information, block data, address information, and storage information stored in the selected entry to the generation processing; and
the generation processing that generates a write instruction for writing into the storage device, based on the identification information, block data, address information, and storage information that is input from the update processing.
